# EUROPÄISCHE PATENTANMELDUNG

(11) **EP 0 827 684 A2**
(43) Veröffentlichungstag der Anmeldung: **11.03.1998**
(21) Anmeldenummer: 97109248.1
(22) Anmeldetag: 07.06.1997
(51) Int. Cl.: A01D 41/14

(54) **Selbstfahrende landwirtschaftliche Erntemaschine**

(30) Priorität: 05.09.1996 DE 19635992
(71) Anmelder: SAME DEUTZ-FAHR S.P.A., 24047 Treviglio (Bergamo) (IT)
(72) Erfinder: Von Allwörden, Wilhelm, 89168 Oberstotzingen (DE)
(74) Vertreter: Dreiss, Fuhlendorf, Steimle & Becker

(57) **Zusammenfassung**

1. Selbstfahrende landwirtschaftliche Erntemaschine (1) mit einem Fahrerstand (2) sowie einer im Bereich vor dem Fahrerstand (2) angeordneten Einrichtung (Anbaueinrichtung (6) wie Schneideinrichtung und/oder Aufnahmeeinrichtung oder dergleichen), wobei erfindungsgemäß vorgesehen ist, daß die Anbaueinrichtung (6) weitestgehend aus dem Sichtbereich des Fahrers bewegbar ist.

## Beschreibung

Die Erfindung betrifft eine selbstfahrende landwirtschaftliche Erntemaschine gemäß den Merkmalen des Oberbegriffes des Patentanspruches 1.

Aus der DE-AS 14 82 896 ist ein Mähdrescher mit einem geteilten Schneidwerk bekannt, wobei die beiden Schneidwerkshälften um eine in Längsrichtung des Mähdreschers liegende Achse verschwenkbar sind, wodurch die Schneidwerkshälften in eine Transportstellung bringbar ist. In dieser Transportstellung sind die beiden Schneidwerkshälften senkrecht und parallel zueinander vor dem Fahrerstand aufgestellt, wodurch die erforderliche Sicht des Fahrers des Mähdreschers auf den Bereich vor dem Mähdrescher, insbesondere bei Straßenfahrten, sehr stark eingeschränkt oder sogar bei verschmutztem Schneidwerk durch Strohanteile unmöglich ist. Daraus resultiert eine erhöhte Verkehrsgefährdung.

Aus der EP-A1 0 373 406 ist es bekannt, die beiden Schneidwerkshälften zum Transport im wesentlichen übereinander zu verschieben, woraus ebenfalls die schon geschilderten Nachteile resultieren und eine aufwendige Mechanik erforderlich ist, um die beiden Schneidwerkshälften übereinander zu verschieben.

Darüber hinaus ist es bekannt, bei einem Mähdrescher den Mähtisch abzunehmen und für Straßenfahrten auf einem Transportwagen abzulegen, wobei danach der Transportwagen an den Mähdrescher angehängt wird. Dadurch ist die Höchstgeschwindigkeit reduziert sowie die Handhabbarkeit des Mähdreschers insbesondere bei Rückwärtsfahrten eingeschränkt. Außerdem nimmt der Anbau und Abbau des Mähtisches sowie das Ankuppeln und das Abkuppeln des Transportwagens erhebliche Zeit in Anspruch, wodurch darüber hinaus auch ein Verletzungsrisiko für die Bedienperson gegeben ist.

Der Erfindung liegt daher die Aufgabe zugrunde, eine gattungsgemäße selbstfahrende landwirtschaftliche Erntemaschine derart auszugestalten, daß bei Fahrten zum Einsatzort und zurück die Verkehrssicherheit unter Berücksichtigung von Verkehrsvorschriften hinsichtlich einer maximal zulässigen Breite und des Sichtfeldes des Fahrers (12-Meter-Kreis der StVZO) gewährleistet ist.

Diese Aufgabe ist durch die Merkmale des kennzeichnenden Teiles des Patentanspruches 1 gelöst.

Dadurch, daß die vor dem Fahrerstand angeordnete Anbaueinrichtung, bei der es sich beispielsweise um eine Schneideinrichtung, eine Aufnahmeeinrichtung (Pick-up) oder dergleichen an Mähdreschern, Großballenpressen, Aufbereitungsmaschinen und dergleichen handelt, weitestgehend aus dem Sichtbereich des Fahrers vom Fahrerstand aus gesehen bewegbar an der Erntemaschine angeordnet ist, ist der Vorteil gegeben, daß diese zum Erreichen sowohl in der Transportstellung als auch in der Arbeitsstellung an der Erntemaschine verbleiben kann. Von wesentlicher Bedeutung ist, daß die Sicht in der Transportstellung der vor dem Fahrerstand angeordneten Anbaueinrichtung frei ist und nicht beeinträchtigt wird, so daß der erforderliche Sichtkeil nach der StVZO gegeben ist.

In vorteilhafter Weise ist die Einrichtung bzw. sind deren Teile verschiebbar, verschwenkbar oder in einer Kombination dieser Bewegungsarten in die Transportstellung und umgekehrt in die Arbeitsstellung bewegbar. Für diese Bewegung können entsprechende Führungen, Übertragungselemente, Hebelmechaniken oder dergleichen sowie Bewegungselemente wie Hydraulikzylinder oder dergleichen eingesetzt werden. Das für den Fahrer erforderliche Sichtfeld kann dadurch erzeugt werden, daß je nach Breite der Anbaueinrichtung ein oder zwei Teile derselben um eine mittig oder außermittig zum Fahrzeug angeordnete Achse oder um beabstandete Achsen verschwenkt werden. Es ist auch bei zwei Teilen eine Achse möglich, wenn zwischen den Teilen und der Achse ein hinreichender Abstand gewährleistet ist. Schließlich können die Teile oder die Achsen auch vor oder nach dem Klappen bzw. Verschwenken verschoben werden, um den Sichtbereich des Fahrers sicherzustellen. Zusätzlich kann die Anbaueinrichtung oder deren Teile nach dem Verschwenken um Längsachsen des Fahrzeuges noch um zumindest eine Querachse verschwenkt werden, um den Sichtbereich des Fahrers zu vergrößern. Dies kann im wesentlichen auch durch geeignete Wahl der im wesentlichen längs ausgerichteten Schwenkachsen und zusätzliches Verschwenken des Förderkanals um seine Anlenkquerachse erfolgen.

In Weiterbildung der Erfindung ist die Einrichtung dreigeteilt, wobei wenigstens zwei Teile, vorzugsweise die beiden äußeren Teile, aus dem Sichtbereich des Fahrers herausbewegbar sind. Dabei verbleibt in der Transportstellung der mittlere Teil, von dem beispielsweise auch der Antrieb der beiden äußeren Teile ausgeht, in seiner Ursprungsstellung, wobei die beiden äußeren Teile in vorteilhafter Weise weitestgehend aus dem Sichtbereich des Fahrers hoch geschwenkt oder seitlich neben den Fahrerstand bewegt werden, um die Transportstellung einzunehmen. Auch hier reduzieren sich wieder die zu handhabenden Massen, was zu den schon genannten Vorteilen führt. Darüber hinaus werden die äußeren Teile kleiner, so daß auch die Sicht zur Seite vom Fahrerstand aus wenig beeinträchtigt ist.

Um die nach der StVZO zulässigen Verdeckungen des Sichthalbkreises nicht zu überschreiten, sind die äußeren Teile im hochgeklappten Zustand vom Fahrer aus gesehen so schmal gehalten, wie technisch möglich. Zu diesem Zweck sind zumindest die an den äußeren Teilen, wenn diese eine Querförderschnecke und eine diese teilweise umgebende Wanne aufweisen, angeordnete Querträger so geformt und verschoben, daß die Verdeckung im wesentlichen nur durch das Maß zwischen dem Grundkörper der Schnecke einerseits und dem Außenmantel der Wanne andererseits gebildet wird.

Vor der Schnecke angeordnete Teile, wie Mähkreisel oder eine Pickup, sind so angeordnet, daß sie im wesentlichen im Blickschatten der Schnecke und der Wanne liegen. Dabei ist die Schnecke so klein wie möglich gehalten. Versteifungskonsolen, die die Querträger verbinden und die Wanne stützen, sind so entlang der äußeren Teile angeordnet, daß auch das Sichtfeld in vertikaler Erstreckung ausreichend ist. Dabei ist auch die Änderung zu berücksichtigen, die durch Hochschwenken des Förderkanals in die angehobene Stellung der Anbaueinrichtung entsteht.

Dadurch, daß die äußeren Teile der Anbaueinrichtung in Fahrtrichtung gesehen soweit vor deren mittlerem Teil versetzt angeordnet sind, daß zumindest der Abgabebereich der Querförderschnecken der äußeren Teile vor der Schneid- und/oder Aufnahmeeinrichtung des mittleren Teils liegt, wird erreicht, daß das von den äußeren Teilen aufgenommene Erntegut vor das Mittelteil gefördert und von diesem wieder aufgenommen und zu dem Förderkanal transportiert wird.

Außerdem ist auf diese Weise Platz zum Hochklappen der äußeren Teile vor dem Mittelteil geschaffen. Durch diese Transportstellung der äußeren Teile wird die gesetzlich vorgeschriebene Gesamtbreite der selbstfahrenden Erntemaschine eingehalten.

Es ist von Vorteil, daß Schwenkmechanismen mit Schwenkachsen für die äußeren Teile an denselben und an horizontalen Klappwellen befestigt sind, die in Versteifungskonsolen des Mittelteils gelagert sind, und daß die Schwenkachsen der Schwenkmechanismen in Arbeitsstellung der äußeren Teile eine horizontale und in deren Transportstellung eine im wesentlichen vertikale Stellung einnehmen. Auf diese Weise können die äußeren Teile um die horizontale Klappwelle hochgeklappt und anschließend um die vertikal stehende Schwenkachse in eine gewünschte Lage geschwenkt werden.

Vorteilhaft ist auch, daß die Schwenkmechanismen Federn aufweisen, die sich an mit den Versteifungskonsolen in Wirkverbindung stehenden Bauteilen bzw. mit den horizontalen Klappwellen und den äußeren Teilen abstützen, diese in Arbeitsstellung entgegen der Schwerkraft entlasten und in deren Transportstellung mit Schwenkanschlägen in Druckkontakt bringen. Durch die Gewichtsentlastung können die äußeren Teile den Unebenheiten des Geländes besser folgen und dadurch die Effizienz der selbstfahrende Erntemaschine steigern. Durch die zwangsweise Positionierung der äußeren Teile an Schwenkanschlägen, werden diese beim Straßentransport ohne Zusatzaufwand in eine bestimmte frei wählbare Stellung gebracht.

Wenn die die äußeren Teile in ihrer Position an den Schwenkanschlägen sichtoptimal verschwenkt sind, werden die diesbezüglichen gesetzlichen Vorschriften erfüllt und eine verkehrsgerechte Handhabung der selbstfahrenden Erntemaschine im Straßenverkehr ermöglicht.

In Weiterbildung der Erfindung ist vorgesehen, daß die Einrichtung in der Transportstellung weitestgehend seitlich neben den Fahrerstand bewegbar ist. Da in der Regel neben dem Fahrerstand ausreichend Platz zur Verfügung steht, wobei sich hinter dem Fahrerstand die breiteren nachfolgenden Einrichtungen bzw. ein die nachfolgenden Einrichtungen abdeckendes Gehäuse der Erntemaschine angeordnet ist, kann die Einrichtung in vorteilhafter Weise in eine Transportstellung gebracht werden, in der die maximal zulässige Breite eingehalten wird und der Sichtbereich vor dem Fahrerstand freigehalten wird. Zu diesem Zweck werden die Anbaueinrichtung oder deren Teile noch um eine quer zur Fahrtrichtung verlaufende Achse geschwenkt bzw. in Fahrzeuglängsrichtung verschoben.

Der Fahrerstand sowie die dahinterliegenden Außenkonturen der landwirtschaftlichen Erntemaschine können zur Aufnahme der Anbaueinrichtung bzw. deren Teile ausgestaltet sein. Insbesondere können die dahinterliegenden Außenkonturen Anschläge aufweisen oder als Anschlag ausgebildet sein, an denen die Teile der Einrichtung in der Transportstellung anliegen. Hier ist es denkbar, die Aufstiegsleiter oder dergleichen zu dem Fahrerstand in der Transportstellung in einer dafür vorgesehenen Ausnehmung zu versenken oder abzunehmen.

Eine bevorzugte Transportstellung ist darin zu sehen, daß die Anbaueinrichtung bzw. deren Teile in der Transportstellung weitestgehend senkrecht oder parallel zu der Aufstandsfläche der landwirtschaftlichen Erntemaschine neben dem Fahrerstand angeordnet sind. Dadurch läßt sich der zur Verfügung stehende Raum bei einer Erntemaschine, bei der die Fahrerkabine (der Fahrerstand) schmäler ist als die nachfolgenden Einrichtungen, optimal unterbringen. Ein Schrägstellen der Anbaueinrichtung bzw. deren Teile entgegen der Fahrtrichtung ist sehr günstig.

Die Erfindung läßt zahlreiche Ausführungsformen zu. Eine schematische Darstellung einer selbstfahrenden landwirtschaftlichen Erntemaschine mit einer entsprechend vor dem Fahrerstand angeordneten Anbaueinrichtung wie einer Schneideinrichtung oder dergleichen ist im folgenden beschrieben und anhand der Figuren erläutert.

Es zeigen:
- Figur 1:: Seitenansicht einer landwirtschaftlichen Erntemaschine,
- Figur 2:: Frontansicht einer landwirtschaftlichen Erntemaschine,
- Figur 3:: Frontansicht einer landwirtschaftlichen Erntemaschine einschließlich der Bewegungsabläufe,
- Figur 4:: Seitenansicht einer landwirtschaftlichen Erntemaschine mit einer Einrichtung in der Transportstellung.
- Figur 5:: Seitenansicht einer modifizierten landwirtschaftlichen Erntemaschine,
- Figur 6:: Frontansicht der landwirtschaftlichen Erntemaschine nach Figur 5,
- Figur 7:: Draufsicht auf die Anbaueinrichtung mit hochgeklappten äußeren Teilen,
- Figur 8:: Seitenansicht der landwirtschaftlichen Erntemaschine nach Figur 7,
- Figur 9:: Draufsicht auf die Anbaueinrichtung in Arbeitsstellung und
- Figur 10:: Draufsicht auf die Anbaueinrichtung in Transportstellung.

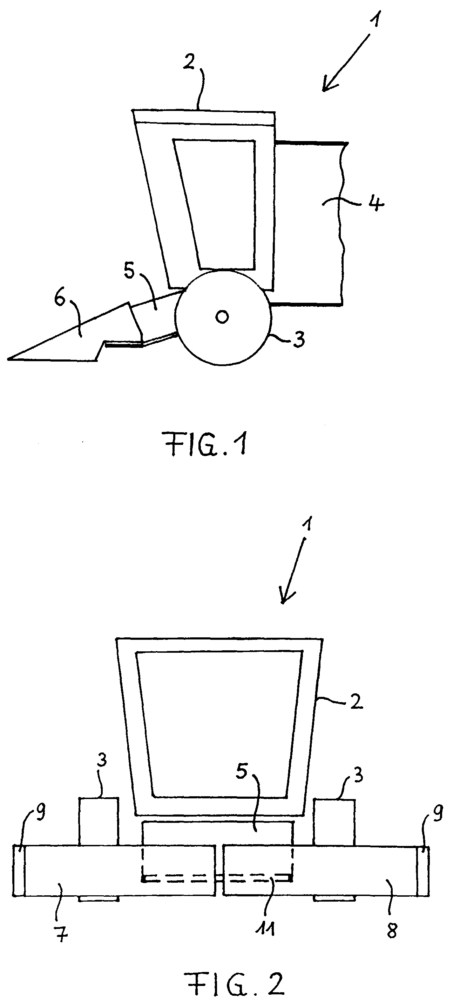

Figur 1 zeigt eine landwirtschaftliche Erntemaschine 1, die im wesentlichen einen Fahrerstand 2 aufweist, der in etwa im Bereich einer Vorderradeinheit 3 angeordnet ist. Dem Fahrerstand 2 schließt sich ein schematisch dargestelltes Gehäuse 4 an, in dem beispielsweise bei einem Mähdrescher Dresch-, Reinigungseinrichtung, Schüttler und weitere Teile untergebracht sind. In der Regel weist das Gehäuse 4 eine größere Breite auf als der Fahrerstand 2, was jedoch nicht zwingend erforderlich ist. An einem nicht näher bezeichneten Chassis der Erntemaschine 1 ist beispielsweise ein Förderkanal 5 angeordnet, der feststehend oder höhenbewegbar ist. An diesem Förderkanal 5 ist (gegebenenfalls abnehmbar) eine vor dem Fahrerstand 2 angeordnete, schematisch gezeigte Anbaueinrichtung mit 6 bezeichnet.

Figur 2 zeigt die Ausgestaltung der Erntemaschine 1 gemäß Figur 1 in der Frontansicht, wobei erkennbar ist, daß die Anbaueinrichtung 6 zwei Hälften 7 und 8 aufweist. Weiterhin ist in Figur 2 gezeigt, daß die beiden Hälften 7 und 8 an ihrem äußeren Bereich eine Antriebseinrichtung 9 aufweisen, von der aus beispielsweise solche Einrichtungen wie ein Schneidwerk, eine Schnecke oder dergleichen angetrieben werden. Die Antriebseinrichtung 9, bei der es sich beispielsweise um ein Getriebe handelt, wird wiederum angetrieben von einer nicht gezeigten weiteren Antriebseinrichtung in der Erntemaschine 1 selber.

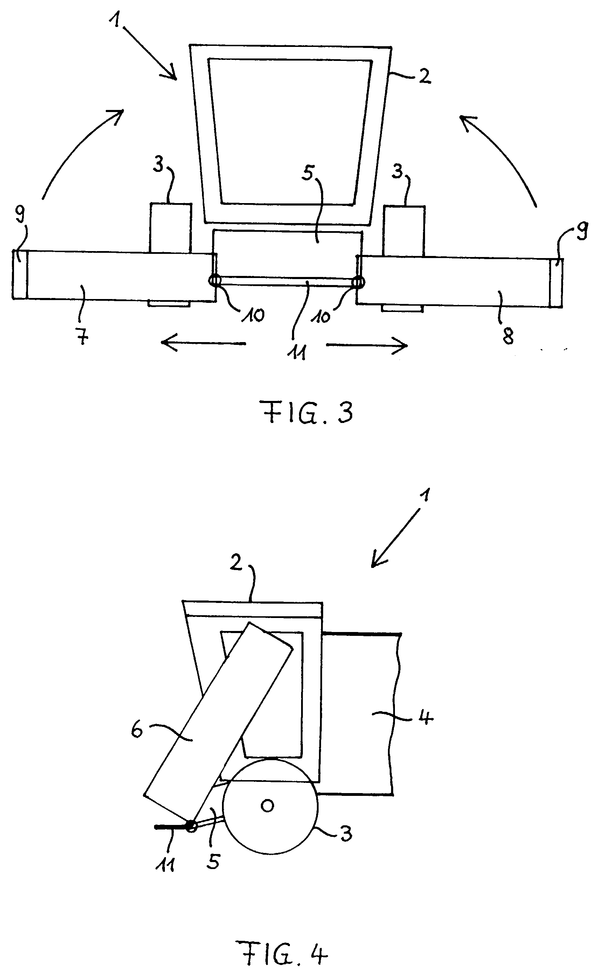

Eine beispielhafte Bewegung der Anbaueinrichtung 6 aus dem Sichtbereich des Fahrerstandes 2 heraus ist in Figur 3 gezeigt. Dabei ist vorgesehen, daß die beiden Hälften 7 und 8 über Gelenke 10 an einer Führungsplatte 11 des Förderkanales 5 angeordnet sind, wobei die Hälften 7 und 8 mittels ihrer Gelenke 10 längs der Führungsplatte 11 nach außen verschiebbar sind. Die beiden Hälften 7 und 8 sind derart verschiebbar, daß ein Zwischenbereich entsteht, der in etwa der Breite des Fahrerstandes 2 entspricht. Nach dieser Verschiebung erfolgt eine Verschwenkung der beiden Hälften 7 und 8 derart, daß diese in ihrer Transportstellung jeweils im wesentlichen seitlich neben dem Fahrerstand 2 sowie weitestgehend senkrecht, schräg oder parallel zu der Aufstandsfläche der landwirtschaftlichen Erntemaschine 1 angeordnet sind.

Eine solche Transportstellung der beiden Hälften 7 und 8 der Anbaueinrichtung 6 ist in Figur 4 gezeigt.

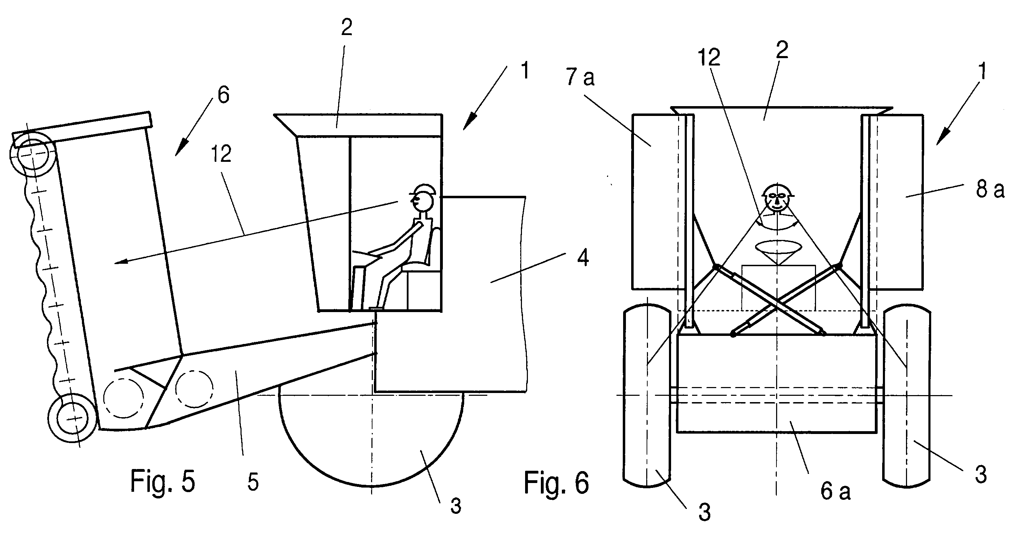

In den Figuren 5 und 6 ist die Anbaueinrichtung 6 dreigeteilt, wobei in der Mitte ein mit dem Förderkanal 5 verbundener mittlerer Teil 6a vorgesehen ist, an dem sich klappbare äußere Teile 7a und 8a anschließen. Den Figuren 5 und 6 ist insbesondere zu entnehmen, daß der Fahrer zwischen den beiden äußeren Teilen 7a und 8a hindurchsehen kann und dabei der mit 12 bezeichnete Sichtbereich hinreichend groß ist.

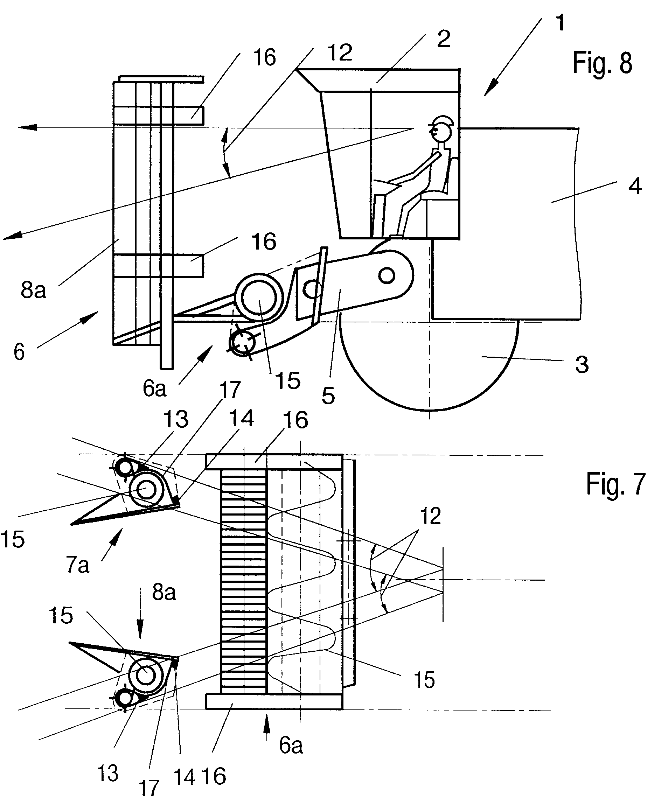

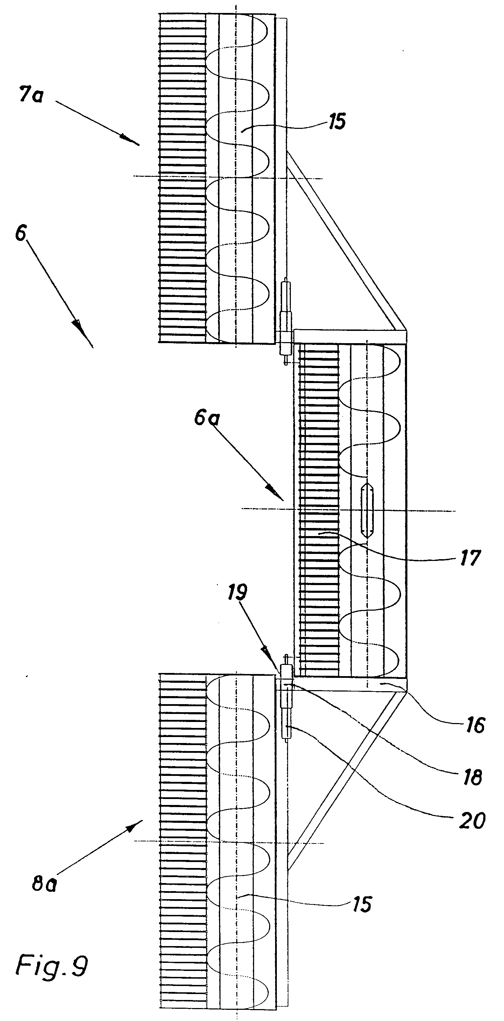

Die Anbaueinrichtung 6 nach den Figuren 7 und 8 ist ebenfalls dreigeteilt und als Pick-up mit Querförderschnecken 15 und Wannen 17 ausgeführt. Die hochklappbaren äußeren Teile 7a und 8a sind vor dem mittleren Teil 6a angeordnet. Die äußeren Teile 7a und 8a können auch in Arbeitsstellung der Anbaueinrichtung 6 versetzt vor dem mittleren Teil 6a angeordnet sein, wobei dann der mittlere Teil das von den äußeren Teilen aufgenommene und zusammengeführte Erntegut zusätzlich aufnimmt. An der Außenseite der Wanne sind Querträger 13 und 14 so angeordnet, daß sie im Projektionsschatten von Querförderschnecken 15 und Wannen 17 liegen. Der Querträger 13 ist dabei zusätzlich im Querschnitt dreieckförmig ausgelegt, damit er die Verdeckung des Sichthalbkreises auf das zulässige Maß verringert. Auch die Pick-up-Trommel ist in den Blickschatten gerückt. Wie insbesondere der Figur 8 zu entnehmen ist, sind Versteifungskonsolen 16 der äußeren Teile 7a, 8a, die deren Wanne 17 stützen, soweit auseinander angeordnet, daß auch in vertikaler Richtung das zulässige Sichtfeld 12 gegeben ist.

In der Draufsicht auf die dreigeteilte Anbaueinrichtung 6 der Figur 9 ist die versetzte Anordnung der äußeren Anbauteile 7a, 8a gegenüber dem mittleren Teil 6a dargestellt. Die äußeren Teile 7a, 8a sind in Fahrtrichtung gesehen soweit vor dem mittleren Teil 6a versetzt angeordnet, daß der Abgabebereich der Querförderschnecken 15 der äußeren Teile 7a, 8a vor der Schneid- oder Aufnahmeeinrichtung 17 des mittleren Teils 6a liegt. Dadurch wird das von den äußeren Teilen 7a, 8a aufgenommene Erntegut vor das Mittelteil 6a gefördert und von diesem wieder aufgenommen und zu dem Förderkanal transportiert. Außerdem ist auf diese Weise Platz zum Hochklappen der äußeren Teile 7a, 8a vor das Mittelteil 6a geschaffen.

Das Hochklappen geschieht mittels Klappwellen 18, die an den äußeren Teilen 7a, 8a befestigt und in den Versteifungskonsolen 16 des Mittelteils 6a gelagert sind.

An den Klappwellen 18 und den äußeren Teilen 7a, 8a sind Schwenkmechanismen 19 mit Schwenkachsen 20 befestigt, die in Arbeitsstellung der äußeren Teile 7a, 8a eine horizontale und deren Transportstellung eine vertikale Stellung einnehmen.

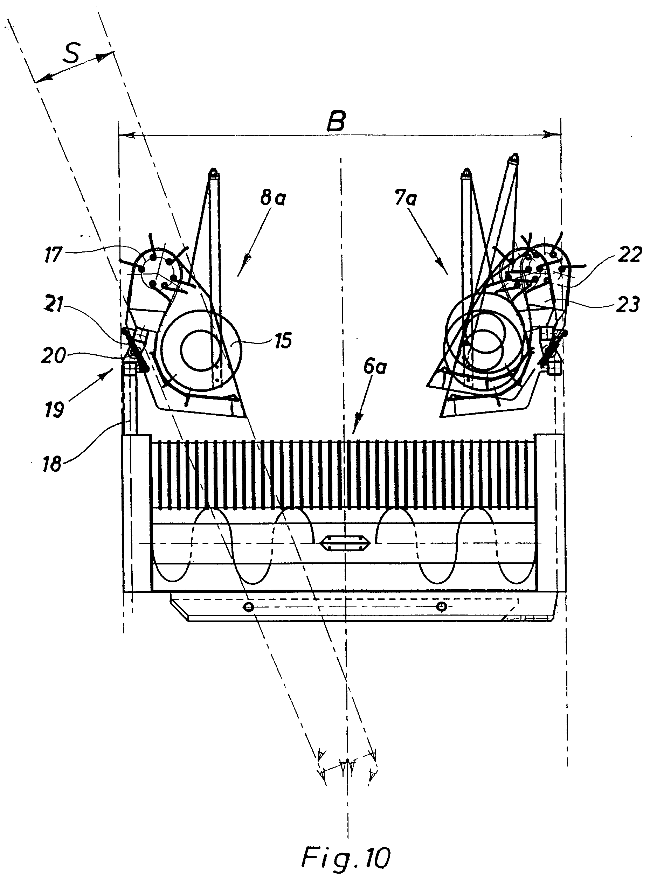

Die Schwenkmechanismen 19 weisen nach Fig. 10 Federn 21 auf, die sich an Bauteilen der horizontalen Klappwellen 18 und den äußeren Teilen 7a, 8a abstützen. Sie entlasten dieselben in deren Arbeitsstellung entgegen der Schwerkraft und ermöglichen diesen, so den Unebenheiten des Geländes besser folgen zu können und dadurch die Effizienz der selbstfahrenden Erntemaschine zu steigern.

In Figur 10, rechte Bildhälfte, ist das äußere Teile 7a in Arbeitsstellung 22 und in Transportstellung 23, in der linken Bildhälfte nur in Transportstellung 23 gezeigt. In Transportstellung 23 legen die Federn 21 die äußeren Teile 7a, 8a an einem Schwenkanschlag fest, dessen Lage so gewählt ist, das dieselben eine sichtoptimale Position einnehmen. Aus Figur 10 ist ersichtlich, daß die gesetzlichen Vorschriften bezüglich der zulässigen Gesamtbreite "B" des Fahrzeuges und der zulässigen Sichtverdeckung "S" des Fahrers ohne Zusatzaufwand eingehalten werden.

## Patentansprüche

1. Selbstfahrende landwirtschaftliche Erntemaschine (1) mit einem Fahrerstand (2) sowie einer im Bereich vor dem Fahrerstand (2) angeordneten Anbaueinrichtung (6), wie Schneideinrichtung und/oder Aufnahmeeinrichtung oder dergleichen, wobei die Anbaueinrichtung (6) oder deren Teile so schwenkbar ausgebildet sind, daß sie nach dem Verschwenken innerhalb der zulässigen Fahrzeugbreite liegen,
**dadurch gekennzeichnet**, daß die Anbaueinrichtung (6) und/oder deren Teile derart schwenkbar und/oder zusätzlich verschiebbar ausgebildet sind, daß das für den Fahrer vom Fahrerstand (2) aus nach der Straßenverkehrszulassungsordnung erforderliche Sichtfeld gegeben ist.

2. Selbstfahrende landwirtschaftliche Erntemaschine (1) nach Anspruch 1,
**dadurch gekennzeichnet**, daß Teile der Anbaueinrichtung (6) um beabstandete Achsen oder um eine Achse, zu der die Teile entsprechend angelenkt sind, derart schwenkbar sind, daß das freizuhaltende Sichtfeld gegeben ist.

3. Selbstfahrende landwirtschaftliche Erntemaschine nach Anspruch 1 oder 2,
**dadurch gekennzeichnet**, daß die Anbaueinrichtung (6) dreigeteilt ist und wenigstens zwei Teile, vorzugsweise die beiden äußeren Teile (7a und 8a) derart bewegbar sind, daß das verlangte Sichtfeld des Fahrers gegeben ist.

4. Selbstfahrende landwirtschaftliche Erntemaschine nach einem der vorhergehenden Ansprüche,
**dadurch gekennzeichnet**, daß zumindest die äußeren Teile (7a und 8a) im hochgeschwenkten Zustand und in einer von den Augen des Fahrers ausgehenden Sichtfeldebene (12) betrachtet, so schmal als technisch möglich, ausgeführt sind.

5. Selbstfahrende landwirtschaftliche Erntemaschine nach einem der vorhergehenden Ansprüche,
**dadurch gekennzeichnet**, daß entlang der äußeren Teile (7a und 8a) angeordnete Querträger (13 und 14) soweit verschoben und so geformt sind, daß das Maß der Sichtverdeckung durch die äußeren Teile (7a und 8a) im wesentlichen von einem Grundzylinder der Querförderschnecke (15) und dem Außenmantel einer Wanne (17) reicht.

6. Selbstfahrende landwirtschaftliche Erntemaschine nach einem der vorhergehenden Ansprüche,
**dadurch gekennzeichnet**, daß die Querträger (13 und 14) verbindende und die Wanne (17) stützende Versteifungskonsolen (16) soweit in Richtung Schwenkachse und/oder in Richtung der freien Enden der äußeren Teile (7a und 8a) verschoben sind, daß ein hinreichendes Sichtfeld (12) auch in vertikaler Ausdehnung gegeben ist.

7. Selbstfahrende landwirtschaftliche Erntemaschine nach einem der vorhergehenden Ansprüche,
**dadurch gekennzeichnet**, daß die äußeren Teile (7a, 8a) der Anbaueinrichtung (6) in Fahrtrichtung gesehen soweit vor deren mittlerem Teil (6a) versetzt angeordnet sind, daß zumindest der Abgabebereich der Querförderschnecken (15) der äußeren Teile (7a, 8a) vor der Schneid- und/oder Aufnahmeeinrichtung (17) des mittleren Teils (6a) liegt.

8. Selbstfahrende landwirtschaftliche Erntemaschine nach einem der vorhergehenden Ansprüche,
**dadurch gekennzeichnet**, daß Schwenkmechanismen (19) mit Schwenkachsen (20) für die äußeren Teile (7a, 8a) an denselben und an horizontalen Klappwellen (18) befestigt sind, die in Versteifungskonsolen (16) des Mittelteils (6a) gelagert sind, und daß die Schwenkachsen (20) der Schwenkmechanismen (19) in Arbeitsstellung der äußeren Teile (7a, 8a) eine horizontale und in deren Transportstellung eine im wesentlichen vertikale Stellung einnehmen.

9. Selbstfahrende landwirtschaftliche Erntemaschine nach einem der vorhergehenden Ansprüche,
**dadurch gekennzeichnet**, daß die Schwenkmechanismen (19) Federn (21) aufweisen, die sich an mit den Versteifungskonsolen (16) in Wirkverbindung stehenden Bauteilen und den äußeren Teilen (7a, 8a) abstützen, diese in Arbeitsstellung entgegen der Schwerkraft entlasten und in deren Transportstellung mit Schwenkanschlägen in Druckkontakt bringen.

10. Selbstfahrende landwirtschaftliche Erntemaschine nach einem der vorhergehenden Ansprüche,
**dadurch gekennzeichnet**, daß die äußeren Teile (7a, 8a) in ihrer Position an den Schwenkanschlägen sichtoptimal verschwenkt sind.

11. Selbstfahrende landwirtschaftliche Erntemaschine nach einem der vorhergehenden Ansprüche,
**dadurch gekennzeichnet**, daß die Anbaueinrichtung (6) in der Transportstellung weitestgehend seitlich neben den Fahrerstand (2) bewegbar ist.

12. Selbstfahrende landwirtschaftliche Erntemaschine (1) nach einem der vorhergehenden Ansprüche,
**dadurch gekennzeichnet**, daß der Fahrerstand (2) sowie die dahinterliegenden Außenkonturen (Gehäuse 4) der landwirtschaftlichen Erntemaschine (1) zur Aufnahme der Anbaueinrichtung (6) bzw. deren Teile (Hälften 7 und 8) ausgestaltet sind.

13. Selbstfahrende landwirtschaftliche Erntemaschine (1) nach einem der vorhergehenden Ansprüche,
**dadurch gekennzeichnet**, daß die Anbaueinrichtung (6) bzw. deren Teile in der Transportstellung im wesentlichen seitlich neben dem Fahrerstand (2) sowie weitestgehend senkrecht oder schräg entgegen der Fahrtrichtung geneigt oder parallel zu der Aufstandsfläche der landwirtschaftlichen Erntemaschine (1) angeordnet sind.
